(19) Europäisches Patentamt

European Patent Office

Office européen des brevets

(11) Numéro de publication : 0 317 383 B1

(12) **FASCICULE DE BREVET EUROPEEN**

(45) Date de publication du fascicule du brevet :
07.08.91 Bulletin 91/32

(51) Int. Cl.⁵ : **B23H 9/00, F22B 37/00**

(21) Numéro de dépôt : 88402699.8

(22) Date de dépôt : 26.10.88

(54) Dispositif de découpage par étincelage de la paroi d'une pièce tubulaire.

(30) Priorité : 20.11.87 FR 8716123

(43) Date de publication de la demande :
24.05.89 Bulletin 89/21

(45) Mention de la délivrance du brevet :
07.08.91 Bulletin 91/32

(84) Etats contractants désignés :
BE CH DE ES GB LI SE

(56) Documents cités :
FR-A- 2 593 421
GB-A- 2 084 542
US-A- 4 476 368
PATENT ABSTRACTS OF JAPAN, vol. 10, no.
346 (M-537)[2402], 21 novembre 1986, page 76
M 537 ; JP-A-61 146 425 (MITSUBISHI HEAVY
IND. LTD) 04-07-1986

(73) Titulaire : FRAMATOME
Tour Fiat 1, Place de la Coupole
F-92400 Courbevoie (FR)

(72) Inventeur : Chamming's, Pierre
41 rue P. Brunier
F-69300 Caluire (FR)
Inventeur : Cartry, Jean-Pierre
117 Cours Gambetta
F-69003 Lyon (FR)

(74) Mandataire : Bouget, Lucien et al
Cabinet Lavoix 2, Place d'Estienne d'Orves
F-75441 Paris Cédex 09 (FR)

## Description

L'invention concerne un dispositif de découpage par étincelage de la paroi d'une pièce tubulaire sertie à l'intérieur d'un logement cylindrique.

Les générateurs de vapeur des réacteurs nucléaires à eau sous pression comportent un faisceau de tubes pliés en U qui sont sertis à chacune de leurs extrémités dans une plaque tubulaire de forte épaisseur. Ces tubes réalisent la séparation entre l'eau sous pression constituant le fluide primaire et de l'eau d'alimentation constituant le fluide secondaire qui est échauffée et vaporisée dans le générateur de vapeur. L'eau primaire sous pression circule à l'intérieur des tubes et l'eau d'alimentation est mise en contact avec la surface extérieure des tubes dans une partie du générateur de vapeur.

Au cours d'une utilisation de longue durée du générateur de vapeur, certains des tubes du faisceau sont susceptibles de se détériorer sous l'effet de la corrosion par le fluide primaire ou le fluide secondaire et de présenter des fissures dans leur paroi. Il est alors nécessaire de mettre le tube correspondant hors service ou de le réparer de façon à éviter une introduction de fluide primaire dans la partie du générateur de vapeur recevant l'eau d'alimentation.

Il est connu en particulier de réparer les tubes de générateurs de vapeur présentant des zones fissurées produisant des fuites, en utilisant une manchette qui est introduite à l'intérieur du tube dans sa zone fissurée et qui est sertie à l'intérieur du tube, de part et d'autre de la zone fissurée.

On peut être amené à retirer ces manchettes, après une certaine durée d'utilisation dans le générateur de vapeur, par exemple dans le but de contrôler ou d'étudier la tenue de la manchette aux conditions de fonctionnement du générateur de vapeur.

Les manchettes de réparation des tubes de générateur de vapeur sont fixées par expansion diamétrale à l'intérieur des tubes, la manchette et le tube étant généralement déformés l'un et l'autre dans le domaine plastique.

Le sertissage de la manchette dans le tube est généralement réalisé, d'une part dans une zone du tube située dans la plaque tubulaire et d'autre part dans une zone située à l'extérieur de la plaque tubulaire. Le sertissage à l'extérieur de la plaque tubulaire entraîne une expansion diamétrale du tube, si bien qu'il n'est plus possible de faire passer cette zone sertie par le trou de passage du tube dans la plaque tubulaire, lors d'un démontage pour expertise.

L'extraction d'une manchette n'est donc possible qu'après avoir donné une certaine possibilité de rétraction diamétrale au tube et à la manchette, dans cette zone sertie, à l'extérieur de la plaque tubulaire.

On a proposé divers procédés pour réaliser cette rétraction du tube et par exemple un chauffage rapide du tube suivi d'un refroidissement au cours duquel les contraintes mises en oeuvre provoquent un retrait diamétral du tube. Toutefois, pour des tubes d'un diamètre sensiblement égal ou inférieur à 20 mm, le retrait qu'on peut obtenir est très faible et la plupart du temps insuffisant pour assurer une extraction dans de bonnes conditions.

On a donc proposé une méthode d'extraction consistant à réaliser par découpage, des fentes longitudinales dans la paroi du tube et/ou de la manchette, dans leur zone sertie, puis à exercer une traction sur le tube et la manchette dont le passage dans les trous de la plaque tubulaire est rendu possible, grâce à un retrait diamétral des zones situées entre les découpes longitudinales.

L'opération de découpage peut être obtenue par étincelage. On connaît par exemple une technique généralement connue et désignée sous le nom d'"arc-scie" électrique. La mise en oeuvre d'une telle technique a été décrite dans le FR-A-2.593.421, dans le cadre de son application à la coupe longitudinale de tubes de générateurs de vapeur.

Dans ce procédé, on introduit, à l'intérieur de la manchette ou du tube serti à démonter, un outillage comportant un disque rotatif qui constitue une électrode alimentée en courant électrique. La mise en rotation et l'avance radiale du disque permettent de découper la paroi de la manchette ou du tube sur toute son épaisseur, l'outillage étant ensuite déplacé sur une longueur axiale correspondant à la longueur voulue pour les fentes longitudinales. L'opération est répétée un nombre de fois suffisant, après une certaine rotation de l'outil autour de l'axe du tube, pour obtenir un nombre voulu de fentes longitudinales espacées suivant la périphérie du tube et/ou de la manchette.

Pendant toute l'opération, de l'eau est mise en circulation à l'intérieur du tube et permet de refroidir et d'éliminer les particules qui sont éjectées par le disque, pendant le découpage.

Il est bien évident qu'un tel dispositif comportant un disque tournant, des moyens d'avance, des moyens d'alimentation et éventuellement des moyens de guidage qui doivent être introduits à l'intérieur du tube présente des difficultés de conception, dans le cas de tubes dont le diamètre intérieur est inférieur à 20 mm.

D'autre part, la réalisation de plusieurs fentes suppose des opérations successives, entre lesquelles il est nécessaire de réorienter l'outillage.

Le but de l'invention est donc de proposer un dispositif de découpage par étincelage de la paroi d'une pièce tubulaire sertie à l'intérieur d'un logement cylindrique dans une installation fixe, pour réaliser, depuis l'intérieur de la pièce tubulaire, au moins deux découpes de direction axiale par rapport au logement cylindrique et à la pièce tubulaire, comportant de manière connue, au moins une électrode, des moyens d'alimentation de cette électrode en courant électrique, des moyens de mise en circulation d'eau dans la pièce tubulaire, un support muni de moyens de fixation sur l'installation, au voisinage d'une extrémité du logement cylindrique et des moyens de guidage dans une direction correspondant à la direction axiale du logement cylindrique, lorsque la fixation du support est réalisée, ce dispositif d'une structure et d'une mise en oeuvre simples permettant de réaliser simultanément plusieurs découpes de direction axiale.

Dans ce but, le dispositif suivant l'invention comporte en outre :

— un ensemble monté mobile par rapport au support dans la direction axiale, grâce aux moyens de guidage et comprenant des moyens moteurs de déplacement dans la direction axiale,

— une canne de forme tubulaire montée sur l'ensemble mobile dans la direction axiale et comportant une partie longitudinale dont le diamètre est inférieur au diamètre intérieur de la pièce tubulaire,

— un porte-électrode fixé à une extrémité libre de la partie longitudinale de la canne constitué sous la forme d'une pièce tubulaire dont une partie de l'alésage est de forme tronconique, séparée en au moins deux segments par des découpes axiales portant chacun une électrode,

— une tige d'actionnement montée mobile axialement dans la canne tubulaire et associée à des moyens de déplacement axial, dont l'extrémité pénétrant dans l'alésage tronconique a un diamètre supérieur au diamètre de l'alésage et permet le déplacement radial des électrodes,

— et un dispositif de mise en vibration axiale ayant une partie mobile dans la direction axiale solidaire de la canne tubulaire et une partie fixe montée sur l'ensemble mobile.

Afin de bien faire comprendre l'invention, on va maintenant décrire, à titre d'exemple non limitatif, en se référant aux figures jointes en annexe, un mode de réalisation d'un dispositif suivant l'invention permettant le découpage d'une manchette de réparation d'un tube de générateur de vapeur et du tube lui-même, avant leur extraction, par la face d'entrée de la plaque tubulaire du générateur de vapeur.

La figure 1 est une vue en coupe d'une partie d'un tube de générateur de vapeur dans lequel est montée une manchette de réparation.

La figure 1A est une vue agrandie du détail A de la figure 1.

La figure 1B est une vue agrandie du détail B de la figure 1.

La figure 2 est une vue en élévation de l'ensemble du dispositif de découpage selon l'invention.

La figure 3A est une vue en coupe par un plan vertical de la partie inférieure du dispositif représenté sur la figure 2.

La figure 3B est une vue en coupe par un plan vertical de la partie supérieure du dispositif représenté sur la figure 2.

La figure 4 est une vue en coupe suivant 4-4 de la figure 3A.

La figure 5 est une vue en coupe suivant 5-5 de la figure 4.

La figure 6 est une vue en coupe suivant 6-6 de la figure 4.

La figure 7 est une vue en élévation et en coupe partielle schématique du dispositif de découpage suivant l'invention avant son introduction dans la plaque tubulaire d'un générateur de vapeur.

La figure 8 est une vue en coupe à plus grande échelle du porte-électrode visible sur la figure 3B.

La figure 9 est une vue en coupe suivant 9-9 de la figure 8.

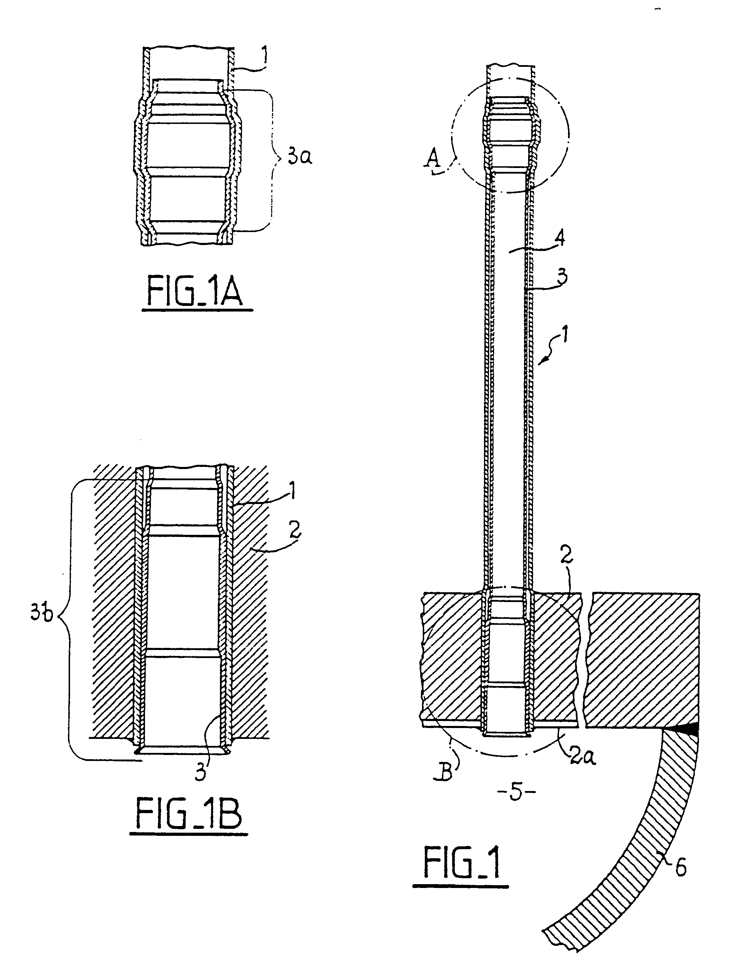

Sur la figure 1, on a représenté une partie d'extrémité d'un tube 1 d'un générateur de vapeur, engagé et serti dans un trou traversant la plaque tubulaire 2 du générateur de vapeur. La plaque 2 est percée d'un réseau de trous recevant chacun une extrémité d'un tube 1 du faisceau.

Le tube 1 comporte, dans sa partie d'extrémité représentée, une chemise de réparation 3 qui est sertie à l'intérieur du tube 1, d'une part dans la zone A représentée sur la figure 1A et située à l'extérieur de la plaque tubulaire 2 et d'autre part dans la zone B représentée sur la figure 1B et située à l'intérieur de la plaque tubulaire 2.

La manchette 3 est destinée à effectuer la réparation du tube qui présente une fissure génératrice de fuite entre les zones A et B.

Sur la figure 1A, on voit la zone 3a de la manchette 3 sertie à l'intérieur du tube 1 à l'extérieur de la plaque tubulaire. Ce sertissage est obtenu par un dudgeon qui réalise une expansion diamétrale de la manchette 3 et du tube 1 suivant le profil représenté. Cette expansion diamétrale s'accompagne d'une déformation plastique de la manchette et du tube.

Sur la figure 1B, on a représenté la zone 3b de la manchette 3 sertie dans le tube 1, à l'intérieur de la plaque tubulaire 2. Ce sertissage qui peut être réalisé par dudgeonnage se traduit par un laminage de la paroi de la manchette 3 sur la paroi intérieure du tube 1. Le tube 1 est lui-même serti dans la plaque tubulaire 2, par laminage de sa paroi contre la paroi du trou traversant la plaque tubulaire 2. Le sertissage du tube 1 et de la manchette dans la zone B n'entraîne pas d'expansion diamétrale du tube, contrairement à ce qu'il en est pour la zone A. La manchette 3 subit uniquement une légère expansion diamétrale, à l'intérieur du tube 1.

Lorsqu'on désire réaliser le démontage de la manchette 3, par exemple à des fins d'expertise, il est nécessaire de réaliser un découpage du tube au-dessus de la zone A puis de supprimer les liaisons entre le tube 1 et la plaque tubulaire 2. Le tube 1 est généralement fixé dans la plaque tubulaire par sertissage et par soudage, si bien qu'il est nécessaire de supprimer la liaison soudée par usinage et de dessertir le tube.

Le dessertissage du tube peut être obtenu par un chauffage rapide suivi d'un refroidissement, les contraintes engendrées dans la plaque tubulaire assurant un retrait diamétral du tube permettant son démontage.

Cependant, la zone A du tube et de la manchette présente un diamètre extérieur sensiblement supérieur au diamètre du trou traversant la plaque tubulaire 2. Il est donc nécessaire de donner à cette zone A une possibilité de rétraction diamétrale, pour assurer son passage au travers de la plaque tubulaire.

La réalisation de plusieurs fentes longitudinales, parallèles à l'axe 4 du tube, traversant la paroi de la manchette 3 et du tube 1, sur toute la longueur de la zone A et éventuellement sur une courte longueur de part et d'autre de cette zone, permet de donner au tube et à la manchette une possibilité de rétraction diamétrale.

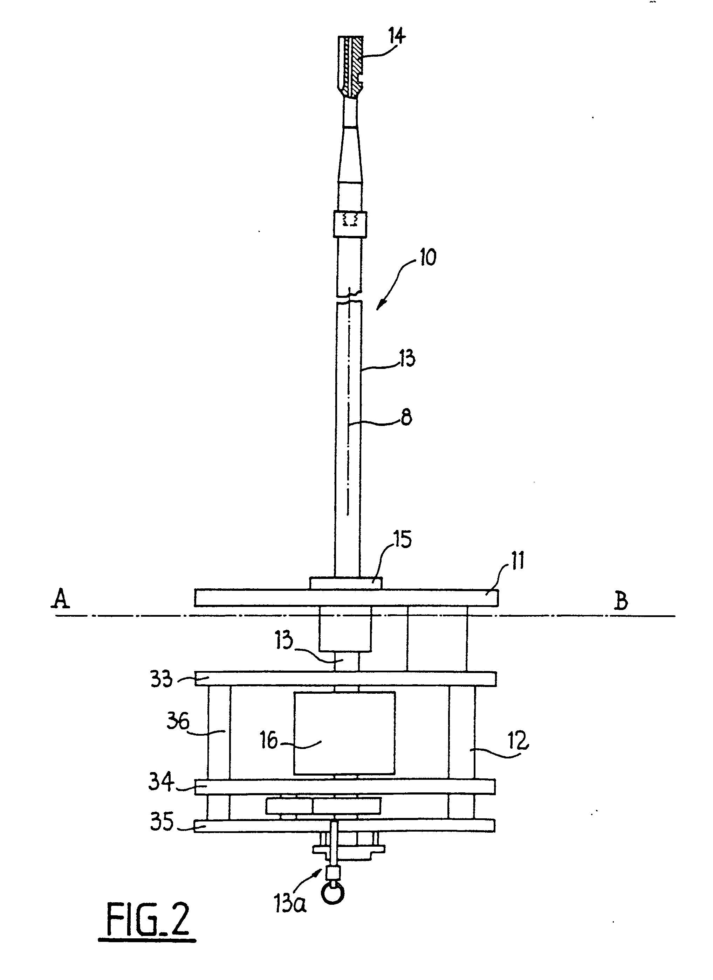

Le dispositif suivant l'invention qui sera décrit en regard des figures 2 à 9 permet de réaliser en une seule opération trois fentes de direction axiale traversant la paroi de la manchette 3 et du tube 1, depuis l'intérieur de la manchette 3.

L'outillage utilisé représenté sur la figure 2 doit être introduit et mis en place à l'intérieur d'une partie du générateur de vapeur située en dessous de la face d'entrée 2a de la plaque tubulaire et constituant une boîte à eau 5 délimitée par un fond 6 de forme hémisphérique comportant des ouvertures d'accès. L'outillage peut être mis en place, soit par un opérateur pénétrant, pendant une très courte durée, dans la boîte à eau 5, soit de manière totalement automatique et commandée depuis l'extérieur de la boîte à eau.

Sur la figure 2, le dispositif suivant l'invention a été représenté sans son carter de protection et de façon très schématique. Ce dispositif désigné de manière générale par le repère 10 comporte une plaque support 11 permettant sa fixation sous la plaque tubulaire 2, à l'intérieur de la boîte à eau 5, un ensemble 12 mobile dans la direction de l'axe 8 du dispositif par rapport à la plaque support 11, une canne tubulaire 13 montée de manière amovible sur l'ensemble mobile 12, dans la direction de l'axe 8 et un porte-électrode 14 fixé à l'extrémité de la canne 13 opposée à sa partie d'extrémité engagée dans l'ensemble mobile 12. Le dispositif comporte également un fourreau de guidage 15 de la canne 13 solidaire de la plaque de support 11 et un vibreur 16 solidaire de l'ensemble mobile 12 et comportant une partie mobile dans la direction de l'axe 8 solidaire de l'extrémité de la canne tubulaire 13. La canne 13 est montée de manière amovible dans l'ensemble mobile 12 et comporte une extrémité 13a opposée au porte-électrode 14, accessible depuis la partie inférieure de l'outillage.

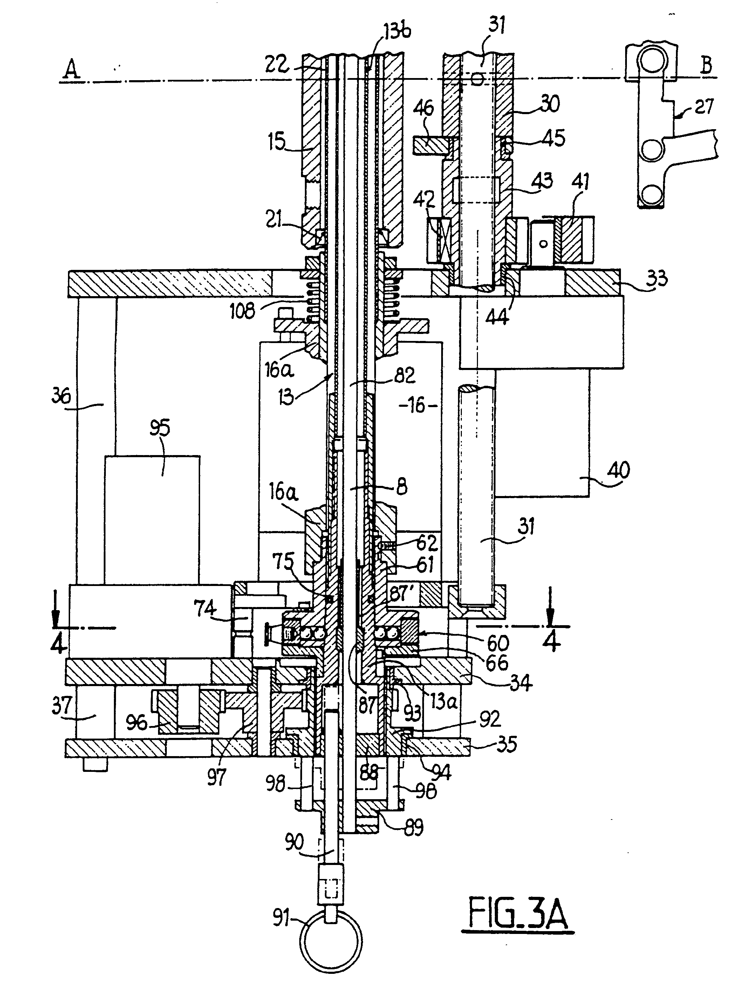

On va maintenant se reporter aux figures 3A, 3B et 4 à 9 pour décrire de manière détaillée le dispositif suivant l'invention et son mode d'utilisation pour le découpage d'une manchette de réparation et d'un tube de générateur de vapeur.

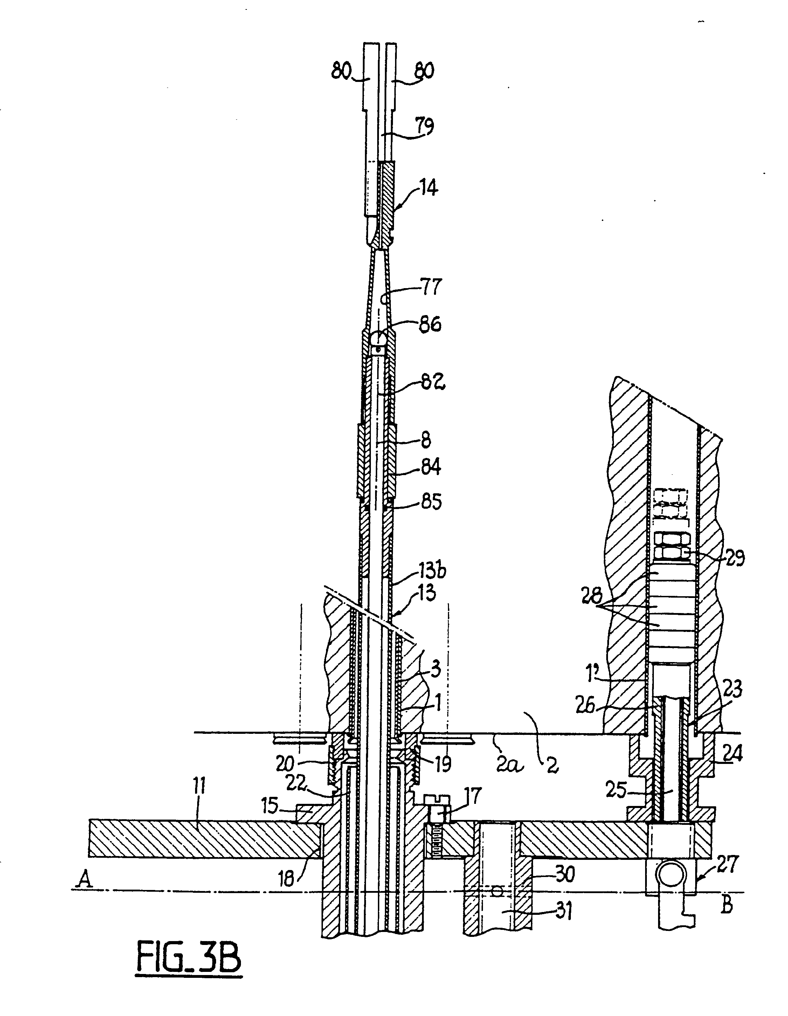

Les figures 3A et 3B représentent respectivement la partie inférieure et la partie supérieure du dispositif mis en place sous la plaque tubulaire 2 pour réaliser le découpage par l'intérieur d'une manchette 3 et d'un tube 1.

Les figures 3A et 3B se raccordent suivant la ligne en traits mixtes AB constituant la trace sur le plan de figure d'un plan horizontal situé à un niveau intermédiaire entre le niveau de la plaque support 11 et le niveau de la partie supérieure de l'ensemble mobile 12.

La plaque support 11 (figure 3B) comporte une ouverture de passage 18 au niveau de laquelle est fixé par des vis 17 le fourreau 15 permettant le guidage et la mise en place de la canne 13. A l'extrémité supérieure du fourreau 15 est fixée une bague d'étanchéité 19 grâce à un écrou moleté 20. Lorsque le dispositif est mis en place sous la plaque tubulaire 2, le joint 19 vient en appui sur la face d'entrée 2a de la plaque tubulaire et assure une mise en contact étanche du support 11, 15 de l'outillage avec la face d'entrée de la plaque tubulaire.

A l'intérieur du fourreau 15 est disposé un joint d'étanchéité à lèvre 21 permettant un montage étanche et glissant d'une chemise externe 22 solidaire de la canne 13, à l'intérieur du fourreau 15.

La plaque support 11 porte en outre trois dispositifs de fixation identiques 23 disposés de manière à venir s'engager dans des tubes 1' du faisceau traversant la plaque tubulaire dans des positions voisines du tube 1 dans lequel on opère le découpage. Les dispositifs 23 permettent de fixer la plaque support 11 sous la face d'entrée 2a de la plaque tubulaire et parallèlement à celle-ci.

Chacun des dispositifs 23 comporte une entretoise 24, une tige filetée 25, une colonne d'espacement 26 et un moyen d'actionnement à genouillère 27 comportant une poignée de blocage et de déblocage du dispositif de fixation.

Six bagues de fixation 28 en caoutchouc sont enfilées sur la tige 25 et intercalées entre des écrous 28 fixés à l'extrémité de la tige 25 et la partie supérieure de la colonne d'espacement 26.

Le dispositif d'actionnement à genouillère 27 permet de déplacer la tige 25 dans sa direction axiale 29 par rapport à l'entretoise 24 en appui sur la face 2a de la plaque tubulaire et à la colonne d'espacement 26. Le déplacement de la tige 25 vers le bas permet de réaliser, par effort axial, l'expansion radiale des bagues en caoutchouc 28 intercalées entre les écrous 29 et la colonne d'espacement 26.

On réalise ainsi, par manoeuvre des trois dispositifs 23, le blocage des bagues 28 dans les tubes 1' et la fixation de l'outillage sous la plaque tubulaire.

La plaque support 11 porte également, par l'intermédaire d'un palier 30, une vis 31 montée dans la direction verticale sous la plaque 11.

L'ensemble mobile 12 est constitué par trois plaques parallèles 33, 34 et 35 assemblées entre elles et maintenues avec un certain écartement par des colonnes longues 36 disposées entre les plaques 33 et 34 et par des colonnes courtes 37 disposées dans le prolongement des colonnes 36, entre les plaques 34 et 35.

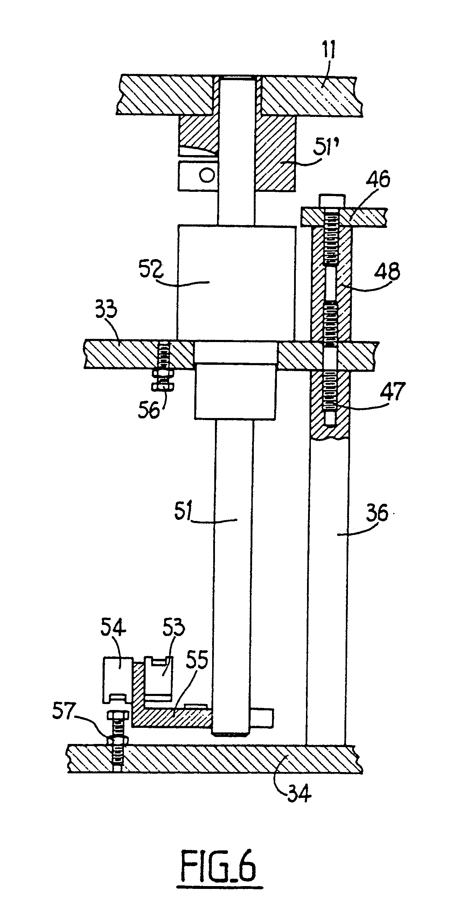

La plaque supérieure 33 de l'ensemble mobile 12 porte un moteur d'entraînement 40 dont l'arbre de sortie est solidaire d'un pignon 41 engrènant avec un pignon 42 lui-même solidaire en rotation d'un écrou 43 engagé sur la vis 31. L'écrou 43 est monté rotatif sur l'ensemble mobile 12, par l'intermédiaire d'un premier palier lisse 44 fixé dans un trou traversant la plaque 33 et d'un second palier lisse 45 monté dans un support 46 lui-même solidaire de l'ensemble mobile 12. Le support 46, comme il est visible sur la figure 6, est fixé par l'intermédiaire de vis 47 et d'entretoises 48 disposées dans le prolongement de deux parmi les quatre colonnes 36, dans une position parallèle à la plaque 33 de l'ensemble mobile, au-dessus de cette plaque.

On voit de plus, sur la figure 6, que la plaque support 11 porte, par l'intermédaire d'un palier de fixation 51', une colonne de guidage 51 perpendiculaire à la plaque 11 et donc de direction verticale.

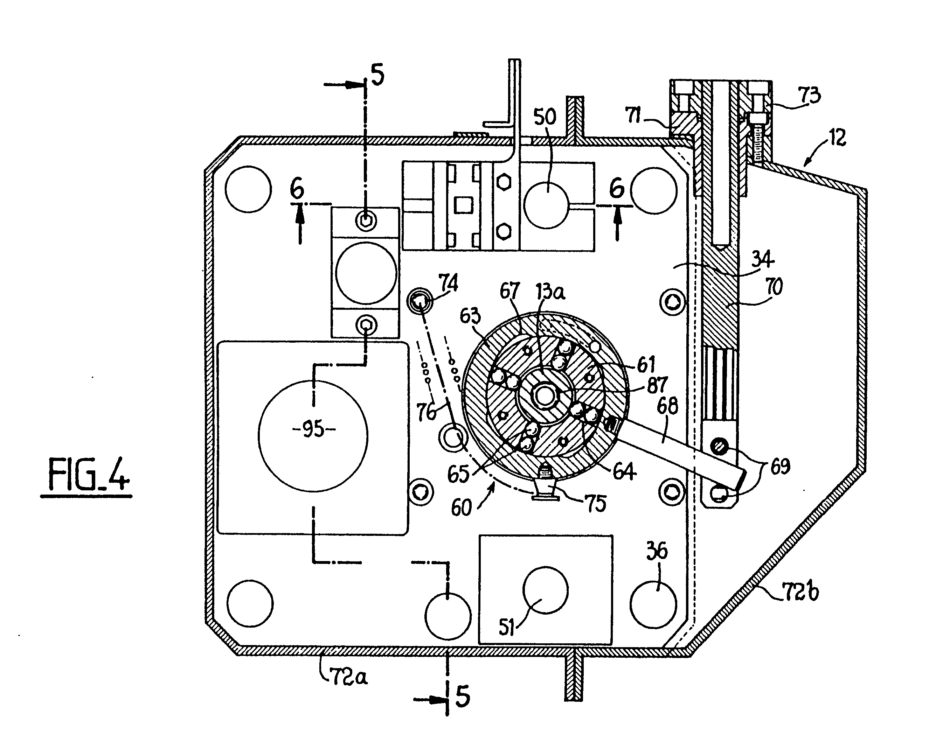

En se reportant à la figure 4, on voit qu'une seconde colonne de guidage 50 verticale est également associée à l'ensemble mobile 12 pour son guidage lors de ses déplacements verticaux. Les colonnes 50 et 51 sont disposées de part et d'autre de la partie de l'ensemble mobile recevant la canne tubulaire 13.

Comme il est visible sur la figure 6, une douille à billes 52 solidaire de la plaque supérieure 33 de l'ensemble mobile est montée coulissante sur la colonne 51. Une seconde douille à billes est également montée sur la plaque 33 dans une position correspondante à la colonne de guidage 50.

Deux contacteurs électriques 53 et 54 sont fixés sur un support 55 lui-même solidaire de la partie inférieure de la colonne 51. Deux vis réglables 56 et 57 sont fixées sur les plaques 33 et 34 de l'ensemble mobile 12 respectivement. Les vis réglables 56 et 57 constituent deux butées placées dans des positions telles que le contacteur 53 et le contacteur 54 respectivement viennent en contact avec les vis 56 et 57, lorsque l'ensemble mobile 12 est en fin de course dans son déplacement vers le haut ou dans son déplacement vers le bas. Ces déplacements de l'ensemble mobile 12 sont obtenus grâce au moteur 40 entraînant en rotation l'écrou 43 se déplaçant sur la vis 31. L'alimentation du moteur 40 est coupée automatiquement lorsque le contacteur 53 ou le contacteur 54 sont actionnés par les butées correspondantes.

Comme il est visible sur les figures 3A et 4, la canne tubulaire 13 est fixée de manière amovible sur l'ensemble mobile 12, par l'intermédiaire du vibreur 16. La partie fixe du vibreur 16 est fixée sur la plaque 34 de l'ensemble mobile et la partie mobile vibrante 16a de ce vibreur 16 est reliée à un support de canne 61 auquel l'embase 13a de la canne peut être reliée par un dispositif de blocage à billes 60 permettant de fixer la canne 13 sur le support 61 de manière amovible.

La partie supérieure du support 61 est filetée et vissée à l'intérieur d'un trou taraudé ménagé dans la partie vibrante 16a du vibreur 16. Un goujon 62 permet de réaliser le blocage du support de canne 61 sur l'élément 16a du vibreur.

Le support de canne 61 de forme tubulaire est traversé sur toute son épaisseur par des ouvertures radiales 64 dans chacune desquelles sont disposées deux billes de blocage 65. Une bague externe 63 est montée mobile en rotation autour du support de canne 61, au niveau des ouvertures radiales 64. La bague 63 est maintenue en place par une pièce de maintien 66.

La bague externe 63 comporte sur sa surface intérieure quatre logements 67 disposés à 90° les uns des autres si l'on considère une rotation de la bague 63 autour de son axe confondu avec l'axe de la canne tubulaire 13.

De même, les quatre ouvertures radiales 64 sont disposées à 90° les unes des autres sur le support de canne 61.

La bague externe 63 est solidaire d'un bras d'actionnement 68 dont l'extrémité opposée à la bague 63 est engagée entre deux pions 69 fixés à l'extrémité d'un arbre cannelé 70 engagé dans un manchon 71 comportant des cannelures correspondant à celles de l'arbre 70. Le manchon 71 est solidaire d'un demi-carter 72a assurant la fermeture de l'ensemble 12 sur sa surface externe, en association avec un second demi-carter 72b.

L'extrémité de l'arbre 70 est reliée à l'extérieur du manchon 71 à une pièce annulaire 73 constituant une butée pour l'arbre 70 ainsi qu'un moyen de manoeuvre pour le verrouillage et le déverrouillage de la canne tubulaire. La bague externe 63 de l'ensemble de verrouillage et de déverrouillage 60 porte également un pion 75 relié par un ressort de rappel 76 à un plot d'accrochage 74 fixé sur la plaque 34 de l'ensemble mobile.

L'embase 13a de la canne tubulaire 13 comporte dans sa partie venant en vis-à-vis des ouvertures 64 et des billes 65 une gorge de blocage axial.

Le verrouillage de la canne 13 dans le support de canne 61 est réalisé, comme il est visible sur la figure 4, en orientant la bague 63 de façon que les parties pleines de la surface intérieure de cette bague, entre les logements 67, viennent en vis-à-vis des ouvertures 64 et des billes 65. Les billes sont alors repoussées dans la gorge de blocage axial de la canne tubulaire 13. Cette position est obtenue par déplacement de l'axe 70 et de la pièce d'extrémité annulaire 73 jusqu'au moment où cette pièce est en contact avec la partie d'extrémité du manchon 71. L'orientation de la bague 63 est ainsi obtenue par l'intermédiaire des pions 69 et du bras d'actionnement 68.

Pour réaliser le déverrouillage de la canne, la pièce d'extrémité 73 et l'arbre 70 sont tirés vers l'extérieur et la bague 63 entraînée par le bras 68 est mise dans une position telle que les quatre logements 67 viennent en vis-à-vis des ouvertures 64. Les billes 65 peuvent alors être repoussées dans les logements 67, si bien qu'un déplacement axial de la canne 13 est possible.

Le rappel de la bague 63 dans sa position de verrouillage est assuré par le ressort 76, dès qu'on relâche la pièce d'extrémité 73 de l'arbre 70.

Le montage de la canne 13 dans le support de canne 61 peut donc être obtenu en déverrouillant le dispositif 60 par traction sur la pièce d'extrémité 73, de telle sorte que la canne 13 puisse être introduite par déplacement axial dans le support 61. Lorsque la canne 13 est en place dans son support, son verrouillage est obtenu en relâchant la pièce d'extrémité 73.

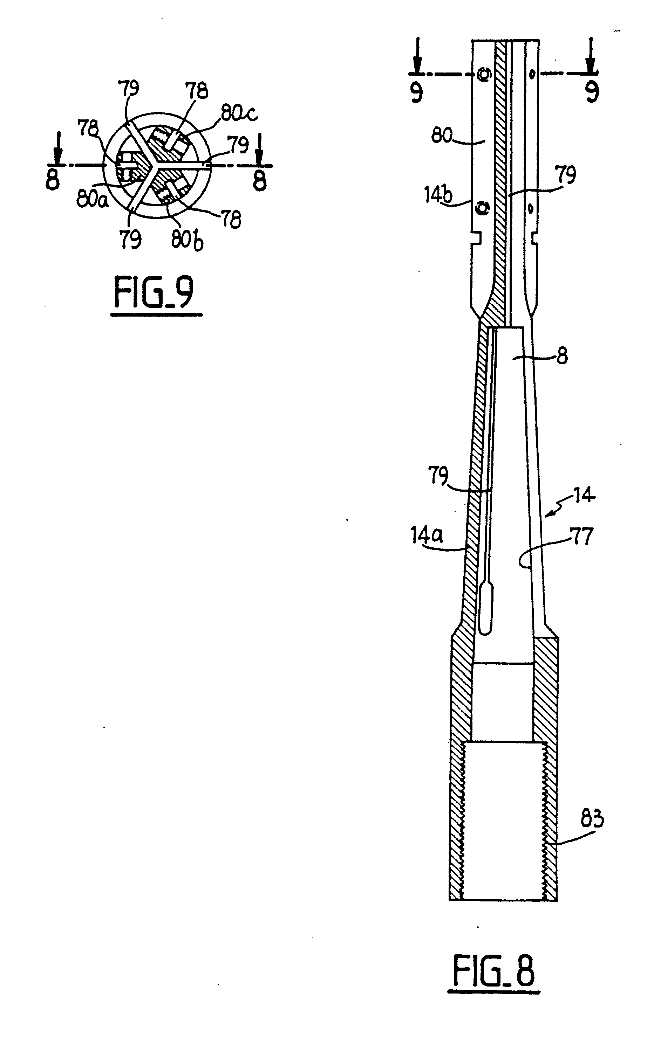

On va maintenant se reporter aux figures 3A et 3B ainsi qu'aux figures 8 et 9 pour décrire la canne tubulaire 13.

L'embase 13a de la canne qui est fixée dans le support de canne 61, comme il a été décrit ci-dessus, comporte sur sa surface externe une gorge renfermant un joint d'étanchéité 75 et, suivant son alésage intérieur, une partie taraudée 87'.

Cette embase 13a est solidaire d'un ensemble tubulaire 13b de grande longueur prolongeant l'embase dans sa direction axiale 8, sur lequel est fixé à son extrémité opposée à l'embase 13a le porte-électrode 14.

Comme il est visible sur les figures 3B, 8 et 9, le porte-électrode 14 comporte une partie tubulaire 14a dont l'alésage 77 est de forme tronconique et, dans le prolongement de la partie tubulaire 14a, un support 14b sur lequel sont fixées les électrodes 78. Trois fentes à 120° 79 séparent le support 14b en trois parties 80a, 80b et 80c portant chacune une électrode de tungstène 78 qui est montée de façon amovible sur la partie correspondante du support et fixée grâce à une vis.

Les fentes 79 sont prolongées dans la partie tubulaire 14a dont elles traversent la paroi.

Une tige d'actionnement 82 est disposée suivant la direction axiale 8 de la canne tubulaire 13, substantiellement sur toute sa longueur. Le porte-électrode 14 comporte un alésage filetée 83 à l'extrémité de sa partie tubulaire 14a dans lequel est fixée la partie d'extrémité 84 de l'ensemble tubulaire 13b de la canne constituant un palier de glissement et de guidage pour la tige d'actionnement 82. Un joint d'étanchéité 85 permet d'isoler l'intérieur de la canne tubulaire du porte-électrode.

La tige d'actionnement 82 comporte à son extrémité une olive 86 de forme sensiblement sphérique dont le diamètre est supérieur au diamètre de l'alésage tronconique 77 dans sa partie courante comportant les fentes 79.

Il est bien évident que le déplacement axial de la tige 82, suivant la direction 8, à l'intérieur de la canne tubulaire permet de réaliser l'écartement des secteurs de la partie tubulaire 14a de la canne séparés par les fentes 79 et donc des parties correspondantes 80a, 80b, 80c du support 14b. Ainsi, les électrodes 78 peuvent être déplacées radialement à l'intérieur de la manchette 3 et du tube 1, lorsque la canne est introduite dans la manchette.

Le déplacement vers le bas de la tige d'actionnement 82 permet le retour élastique des parties 80a, 80b et 80c du support en direction de l'axe 8.

En se reportant à la figure 3A, on va maintenant décrire les moyens assurant le déplacement axial de la tige 82 à l'intérieur de la canne tubulaire 13. La tige 82 est solidaire, dans sa partie venant se loger à l'intérieur de l'embase 13a de la canne, d'une douille filetée extérieurement 87. La douille 87 est en prise avec le taraudage 87' de l'embase 13a. La partie d'extrémité de la tige 82 traverse un palier d'étanchéité lisse 88 fermant l'alésage de l'embase 13a. L'extrémité correspondante de la tige 82 est solidaire d'un embout 89 assurant le guidage et l'entraînement de la tige 82.

Une tige 90 parallèle à la tige 82 est également fixée sur l'embout 89 et traverse le palier 88. Cette tige porte à son extrémité située à l'extérieur de l'embase 13a, un anneau de préhension 91. Elle constitue une goupille d'immobilisation en rotation de l'embout 89 pendant les déplacements de la machine.

Un pignon 92 est monté rotatif autour de l'axe 8, sur l'ensemble mobile, grâce à des paliers lisses 93 et 94 disposés respectivement sur la plaque 34 et sur la plaque 35 de l'ensemble mobile 12. Un motoréducteur 95 est fixé sur la face supérieure de la plaque 34 et permet l'entraînement en rotation autour de l'axe 8, par l'intermédiaire de pignons 96 et 97, du pignon 92. Le pignon 92 est solidaire de deux colonnes 98 engagées à glissement dans des ouvertures de l'embout 89. Le pignon 92 est donc solidaire en rotation de l'embout 89, des tiges 82 et 90 et du palier 88. La mise en rotation autour de l'axe 8 de la tige 82 solidaire de la douille filetée 87 entraîne le déplacement axial de la tige 82 et de l'embout 89 guidé par les colonnes 98, par coopération de la douille filetée 87 et de l'alésage taraudé 87'.

L'amplitude maximale du déplacement axial de la tige 82 déterminée par la mise en butée de la pièce 89 est de 20 mm.

Cette course de 20 mm de la tige 82 permet un déplacement de l'olive 86 dans l'alésage tronconique 77 permettant de réaliser un écartement radial des électrodes 78 suffisant pour assurer le perçage par électro-érosion de la manchette 3 et du tube 1.

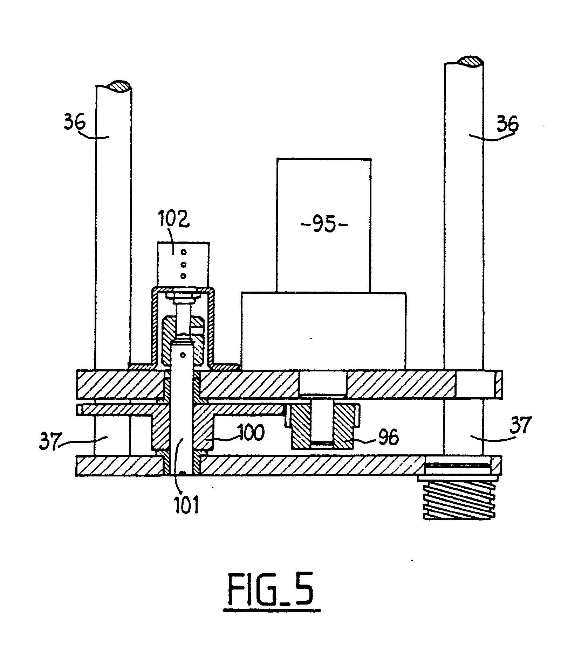

Comme il est visible sur la figure 5, le pignon 96 monté sur l'axe de sortie du motoréducteur 95 engrène avec une roue dentée 100 dont l'axe 101 est monté rotatif dans les plaques 34 et 35 du support mobile 12, par l'intermédiaire de paliers lisses. L'extrémité de l'axe 101 est solidaire de la partie tournante d'un potentiomètre 102 permettant l'étalonnage et la mesure des déplacements de la tige 82 et donc des déplacements radiaux des électrodes 78.

On va maintenant décrire, en se référant à l'ensemble des figures et en particulier aux figures 1, 2 et 7, la mise en oeuvre du dispositif pour réaliser le découpage d'un tube 1 d'un générateur de vapeur et d'une manchette de réparation 3 de ce tube, dans la zone A de sertissage de la manchette à l'extérieur de la plaque tubulaire 2.

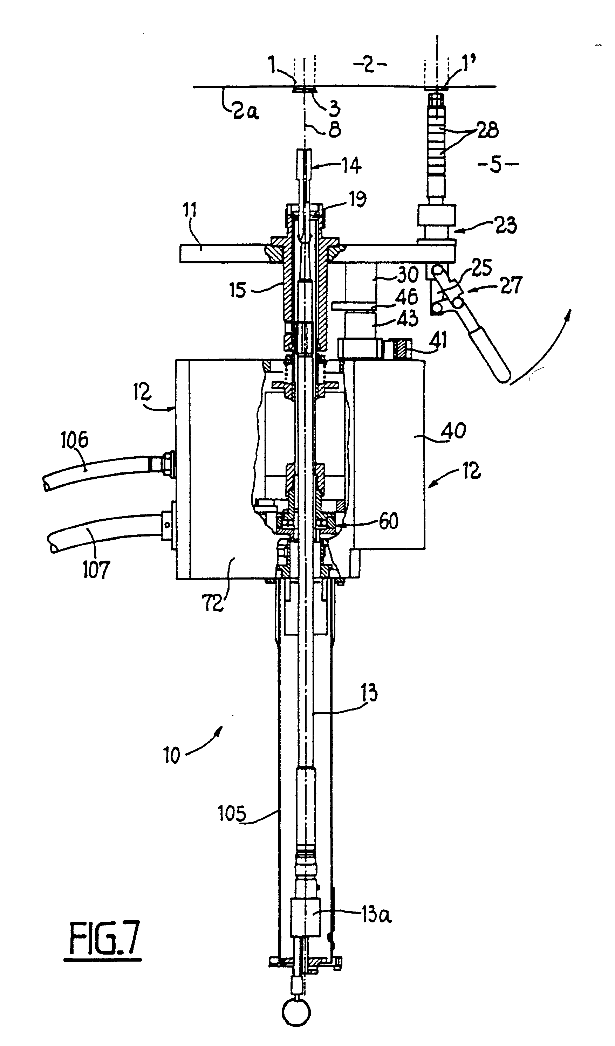

Sur la figure 7, le dispositif 10 suivant l'invention a été représenté dans la position qu'il occupe à l'intérieur de la boîte à eau 5, avant sa fixation sur la plaque tubulaire 2 et l'introduction de la canne 13 suivant l'axe 8 d'un tube 1 comportant une manchette de réparation 3 dont on veut assurer le démontage.

La canne 13 du dispositif est en position rétractée, seul le porte-électrode 14 étant saillant au-dessus du fourreau 15 solidaire de la plaque support 11 du dispositif. La canne 13 est engagée dans l'ensemble mobile 12 qui est lui-même en position haute sur ses éléments de guidage et de déplacement solidaires de la plaque support 11.

La canne est engagée, en dessous du carter 72 de l'ensemble mobile 12, dans un carter de protection tubulaire 105 solidaire du carter 72.

Les dispositifs à genouillère 27 des trois moyens de fixation 23 sont dans leur position relâchée, les bagues 28 étant dans un état non dilaté. Le diamètre nominal extérieur de ces bagues 28 est alors légèrement inférieur au diamètre intérieur d'un tube quelconque 1' du générateur de vapeur ne comportant pas de manchette de réparation 3.

L'outillage 10 est amené, soit automatiquement avec commande à distance, soit manuellement dans sa position représentée sur la figure 7, où l'axe 8 de la canne 13 est confondu avec l'axe du tube 1 comportant la manchette 3 dont on veut réaliser le découpage. Simultanément, les axes des tiges d'actionnement des moyens de fixation 23 sont alignés avec trois tubes 1' voisins du tube 1.

Les parties d'extrémité des moyens de fixation 23 comportant les bagues 28 à l'état non dilaté sont introduites dans les tubes 1', puis les dispositifs à genouillère 27 sont actionnés chacun pour faire descendre et bloquer la tige 26 correspondante dans sa position basse. Ce déplacement de la tige 26 réalise la dilatation des bagues 28 à l'intérieur des tubes 1'.

La mise en place du dispositif est réalisée de manière que le joint 19 vienne en appui sur la face d'entrée 2a de la plaque tubulaire. Seule la partie supérieure de la canne 13 constituée par le porte-électrode 14 est alors engagée à l'intérieur de la manchette 3.

On réalise l'introduction de la canne à travers une échancrure du carter de protection 105 prévue à cet effet, par poussée manuelle vers le haut, la mise en place de la canne 13 à l'intérieur de l'ensemble mobile 12. Pour cela, on manoeuvre dans le sens de l'ouverture, le dispositif de fixation 60.

Lorsque la canne est arrivée dans sa position de service à l'intérieur de l'ensemble mobile 12, on réalise le verrouillage de cette canne 13, grâce au dispositif 60, comme il a été expliqué plus haut.

La longueur de la canne est choisie de façon que dans cette position, les électrodes 78 du porte-électrode 14 soient à un niveau dans le tube 1 situé légèrement au-dessus de la zone de la manchette 3 sertie à l'intérieur du tube 1 et disposé à l'extérieur de la plaque tubulaire 2.

Le découpage de fentes de direction axiale dans la manchette et le tube peut alors être réalisé de manière totalement automatique, par commande depuis l'extérieur de la boîte à eau 5, après retrait de la goupille de sécurité 90.

Un câble d'alimentation en courant électrique 106 de la canne et du porte-électrode est fixé sur le carter 72 de l'ensemble mobile. Le câble 106 passe par un trou d'homme de la boîte à eau 5 et est relié, à l'extérieur de la boîte à eau, à une armoire d'alimentation électrique.

D'autres câbles ou conduits 107 également reliés au carter 72 permettent par exemple l'alimentation du vibreur 16 qui est réalisé sous forme électro-magnétique et comporte un ressort de rappel 108.

Le perçage et le découpage par électro-érosion de la manchette 3 et du tube 1 sont effectués sous eau. Une circulation d'eau à l'intérieur du tube 1 permet d'éliminer les particules de métal arrachées par électro-érosion.

Préalablement à l'introduction du dispositif 10 dans la boîte à eau 5, on a effectué l'étalonnage du potentiomètre 102 permettant de mesurer et de régler le déplacement de la tige d'actionnement 82 et donc le déplacement radial des électrodes 78.

Pour cela, le porte-électrode 14 est introduit successivement dans deux gabarits constitués par des tubes dont le diamètre intérieur correspond respectivement au diamètre intérieur de la manchette dans la zone sertie et au diamètre extérieur du tube, également dans la zone sertie A.

Entre les deux points de mesure du potentiomètre, le déplacement de la tige d'actionnement 82 et donc des électrodes 78 correspond à la traversée de la paroi de la manchette 3 et du tube 1, dans la zone où l'on réalise les découpes.

Lorsque le dispositif 10 est en place dans le tube 1, comme indiqué ci-dessus, on commande donc le déplacement radial des électrodes 78, en activant le motoréducteur 95, jusqu'au premier point de mesure du potentiomètre 102. Les électrodes 78 sont alors pratiquement en contact avec la surface intérieure de la chemise de réparation 3. On alimente alors les électrodes 78, tout en réalisant le déplacement de la tige 82 grâce au motoréducteur 95 jusqu'au second point de mesure du potentiomètre 102. Lorsque ce second point de mesure est atteint, on a réalisé le perçage complet de la chemise 3 et du tube 1 suivant trois zones disposées à 120° et correspondant à la position des électrodes 78. La tige 82 est maintenue dans sa position haute.

On met alors en fonctionnement le vibreur 16 et le moteur 40 d'entraînement de l'ensemble mobile 12 en translation verticale.

Le vibreur 16 produit un déplacement alternatif de très faible amplitude de la canne 13, du porte-électrode 14 et des électrodes 78, dans la direction verticale. Le déplacement vers le bas de l'ensemble mobile 12, grâce au moteur 40, à l'écrou 43 et à la vis 31 produit simultanément un mouvement d'avance du porte-électrode dans la direction axiale. On réalise ainsi automatiquement et simultanément le découpage de trois fentes à 120° dans la paroi de la manchette de réparation 3 et du tube 1. Le déplacement de l'ensemble mobile 12 s'arrête lorsque la vis de butée 56 est venue actionner le contacteur d'arrêt 53 (figure 6).

L'amplitude totale du mouvement est de l'ordre de 120 mm, ce qui permet d'assurer un découpage de la manchette et du tube sur toute la zone sertie A et sur des zones voisines.

L'outillage 10 peut alors être démonté.

On introduit dans la manchette 3 et dans le tube 1, dans leur partie située à l'intérieur de la plaque tubulaire 2, un moyen de chauffage pour réaliser le retrait et le dessertissage du tube et de la manchette, après avoir réalisé le découpage du tube 1 au-dessus de la manchette 3.

En exerçant une traction sur l'extrémité de la manchette et du tube, depuis la boîte à eau 5, on peut alors réaliser l'extraction du tube 1 et de la manchette 3, la zone A dans laquelle ont été réalisées les trois découpes de direction axiale pouvant subir un retrait diamétral lui permettant de passer à travers l'ouverture de la plaque tubulaire.

Il apparaît donc que le dispositif suivant l'invention permet de réaliser de manière automatique trois découpes de direction axiale dans une pièce tubulaire, depuis l'intérieur de cette pièce. Les découpes sont réalisées simultanément par déplacement uniquement axial de l'outillage, après une première phase où a été réalisé le perçage de la pièce tubulaire constituée par la manchette et le tube.

Ce dispositif est beaucoup plus simple, quant à sa réalisation mécanique, qu'un dispositif "arc-scie" dont il est très difficile de réaliser une miniaturisation pour son application au découpage intérieur de tubes ou pièces tubulaires d'un diamètre inférieur à 20 mm.

D'autre part, les déplacements des électrodes, pendant l'usinage, aussi bien dans la direction radiale pendant la première phase de perçage qu'en direction axiale pendant la deuxième phase de découpage sont parfaitement déterminés et parfaitement contrôlés.

Il est bien évident que l'invention ne se limite pas au mode de réalisation qui a été décrit.

C'est ainsi qu'on peut réaliser les déplacements axiaux de l'ensemble mobile et les déplacements radiaux des électrodes d'une manière différente de celle qui a été décrite.

De la même façon, on peut réaliser d'une manière différente le blocage de la canne tubulaire à l'intérieur de l'ensemble mobile.

On peut concevoir d'autres formes pour le support de l'outillage et pour ses moyens de fixation sous la plaque tubulaire du générateur de vapeur.

Enfin, le dispositif suivant l'invention peut être utilisé pour la réalisation par découpage de fentes axiales dans la paroi de pièces tubulaires différentes de tubes de générateur de vapeur et de leurs manchettes de réparation.

## Revendications

1. Dispositif de découpage par étincelage de la paroi d'une pièce tubulaire sertie à l'intérieur d'un logement cylindrique dans une installation fixe, pour réaliser, depuis l'intérieur de la pièce tubulaire, au moins deux découpes de direction axiale par rapport au logement cylindrique et à la pièce tubulaire, comportant de manière connue, au moins une électrode, des moyens d'alimentation de cette électrode en courant électrique, des moyens de mise en circulation d'eau dans la pièce tubulaire, un support (11) muni de moyens de fixation (23) sur l'installation fixe, au voisinage du logement cylindrique et des moyens de guidage (15, 22) dans une direction correspondant à la direction axiale du logement cylindrique, lorsque la fixation du support est réalisée, caractérisé par le fait qu'il comporte en outre :

— un ensemble (12) monté mobile par rapport au support (11), dans la direction axiale, grâce aux moyens de guidage (15, 22) et comprenant des moyens moteurs de déplacement (40, 41, 43, 31) dans la direction axiale,

— une canne (13) de forme tubulaire montée sur l'ensemble mobile (12) dans la direction axiale comportant une partie longitudinale (13b) dont le diamètre est inférieur au diamètre intérieur de la pièce tubulaire (1, 3),

— un porte-électrode (14) fixé à l'extrémité libre de la partie longitudinale (13b) de la canne (13) constituée sous la forme d'une pièce tubulaire dont une partie (77) de l'alésage est de forme tronconique, séparée en au moins deux segments (80a, 80b, 80c) par des découpes axiales (79), portant chacun une électrode (78),

— une tige d'actionnement (82) montée mobile axialement dans la canne tubulaire (13) et associée à des moyens de déplacement axial (95, 96, 97, 92, 87, 76), dont l'extrémité (86) pénétrant dans l'alésage tronconique (77) a un diamètre supérieur au diamètre de l'alésage (77) et permet le déplacement radial des électrodes (78),

et un dispositif de mise en vibration axiale (16) ayant une partie (16a) mobile dans la direction axiale solidaire de la canne tubulaire (13) et une partie fixe montée sur l'ensemble mobile (12).

2. Dispositif de découpage suivant la revendication 1, dans le cas où la pièce tubulaire (1) est constituée par un tube d'un générateur de vapeur serti à l'intérieur d'un logement cylindrique de la plaque tubulaire (2) du générateur de vapeur, caractérisé par le fait que le support (11) est constitué par une plaque et que les moyens de fixation (23) sont susceptibles d'assurer la fixation de cette plaque (11) dans une position parallèle à la face d'entrée (2a) de la plaque tubulaire.

3. Dispositif de découpage suivant la revendication 2, caractérisé par le fait que les moyens de fixation (23) de la plaque (11) parallèlement à la face (2a) de la plaque tubulaire sont constitués par des bagues (28) dilatables radialement dont le diamètre nominal extérieur est inférieur au diamètre intérieur des tubes (1') du générateur de vapeur et par des moyens (26, 27) pour réaliser la dilatation radiale des bagues (28) à l'intérieur d'un tube (1') du générateur de vapeur.

4. Dispositif de découpage suivant la revendication 3, caractérisé par le fait que les moyens de dilatation radiale des bagues (28) sont constituées par une tige (25) et un dispositif à genouillère (27) permettant de déplacer la tige (25) dans sa direction axiale, les bagues (28) étant intercalées entre un moyen d'appui (29) solidaire de la tige (25) et une colonne (26) en appui sur la plaque support (11).

5. Dispositif de découpage suivant la revendication 2, caractérisé par le fait que les moyens de guidage (50, 51) de l'ensemble mobile (12) par rapport à la plaque support (11) sont constitués par des colonnes fixées à l'une de leurs extrémités sur la plaque support (11) perpendiculairement à celle-ci, l'ensemble mobile (12) comportant des douilles à bille (52) associées à chacune des colonnes (50, 51).

6. Dispositif de découpage suivant la revendication 2, caractérisé par le fait que les moyens de déplacement de l'ensemble mobile (12) sont constitués par une vis (31) solidaire de la plaque support (11) par une de ses extrémités et perpendiculaire à cette plaque support (11), par un écrou (43) engagé sur la vis (31) et monté rotatif sur l'ensemble mobile (12) et par des moyens d'entraînement en rotation de l'écrou (43) constitués par un moteur (40) et au moins un pignon (41, 42), portés par l'ensemble mobile 12.

7. Dispositif de découpage suivant la revendication 6, caractérisé par le fait qu'il comporte deux contacteurs (53, 54) solidaires de la plaque support (11) et des butées (56, 57) solidaires de l'ensemble mobile (12), pour réaliser l'arrêt du moteur dans un sens de déplacement et dans l'autre, suivant la direction perpendiculaire à la plaque support (11).

8. Dispositif de découpage suivant la revendication 2, caractérisé par le fait que l'ensemble mobile (12) comporte au moins deux plaques parallèles (33, 34, 35) assemblées entre elles par des colonnes (36, 37) perpendiculaires aux plaques (33, 34, 35), les moyens de guidage (50, 51, 52) de l'ensemble mobile (12) par rapport à la plaque support (11) assurant un déplacement de l'ensemble mobile (12) dans la direction perpendiculaire à la plaque support (11) et aux plaques (33, 34, 35) parallèles à la plaque support (11).

9. Dispositif de découpage suivant l'une quelconque des revendications 2 à 8, caractérisé par le fait que la canne (13) comporte à l'une de ses extrémités une embase (13a) et que l'ensemble mobile (12) comporte un dispositif de verrouillage et de déverrouillage axial (60) de l'embase (13a) dans l'ensemble mobile (12).

10. Dispositif de découpage suivant la revendication 9, caractérisé par le fait que le dispositif de verrouillage et de déverrouillage (60) de la canne (13) est constitué par un support de canne (61) de forme tubulaire, rigidement solidaire de la partie mobile (16a) du vibreur (16) dont la paroi est percée par des ouvertures de direction radiale (64) renfermant chacune au moins une bille (65), par une bague externe (63) comportant des logements (67) sur sa surface interne montée rotative autour du support de canne tubulaire (61) et par des moyens d'actionnement (70, 73, 76) pour faire tourner la bague externe (63) dans un sens ou dans l'autre autour de l'axe du support tubulaire (61), l'embase (13a) de la canne (13) comportant une gorge de verrouillage axiale susceptible de venir, lorsque la canne (13) est engagée dans le support de canne (61) en vis-à-vis des ouvertures (64) renfermant les billes (65) et la rotation de la bague externe (63) amenant en vis-à-vis des ouvertures (64) renfermant les billes (65), soit un logement (67) pour réaliser le déverrouillage de la canne, soit une partie intermédiaire de la surface interne de la bague (63) pour réaliser le verrouillage axial de la canne (13) par introduction des billes (65) dans la gorge de l'embase (13a).

11. Dispositif de découpage suivant la revendication 9, caractérisé par le fait que l'embase (13a) de la canne tubulaire (13) comporte un alésage taraudé (87') et que la tige d'actionnement (82) disposée axialement dans cet alésage comporte une partie filetée (87) en engagement avec l'alésage taraudé (87'), la tige d'actionnement (82) étant associée à des moyens (95, 96, 97, 92) pour sa mise en rotation autour de son axe (8), et la partie filetée (87) coaxiale à la tige d'actionnement (82) assurant par coopération avec l'alésage taraudé (87'), le déplacement axial de la tige d'actionnement (82) et le déplacement radial des électrodes (78).

12. Dispositif de découpage suivant la revendication 11, caractérisé par le fait que les moyens d'entraînement en rotation de la tige (82) sont constitués par un motoréducteur (95), au moins un pignon (96, 97, 92) entraîné en rotation par le motoréducteur et deux colonnes de guidage (98) solidaires d'un pignon (92) entraîné par le motoréducteur (95) et engagées à glissement dans un embout (89) solidaire de l'extrémité de la tige d'actionnement (82) opposée à son extrémité (86) pénétrant dans l'alésage tronconique (77) du porte-électrode (14).

13. Dispositif de découpage suivant la revendication 12, caractérisé par le fait qu'il comporte un moyen de mesure du déplacement de la tige d'actionnement (82) constitué par un potentiomètre (102) dont la partie rotative est reliée pour son entraînement en rotation à l'arbre de sortie du motoréducteur (95) par l'intermédiaire d'au moins un pignon (96, 100).

14. Application d'un dispositif suivant l'une quelconque des revendications 2 à 13 au découpage par l'intérieur d'une pièce tubulaire constituée par un tube de générateur de vapeur (1) et une manchette (3) de réparation de ce tube sertie à l'intérieur du tube (1), le découpage étant effectué dans une zone (A) de la manchette (3) sertie à l'intérieur du tube (1), à l'extérieur de la plaque tubulaire (2).

15. Application selon la revendication 14, caractérisée par le fait que le diamètre intérieur du tube (1) est inférieur à 20 mm.

**Patentansprüche**

1. Vorrichtung zum Ausschneiden mittels Funkenerosion der Seitenwand eines rohrförmigen Teils, das im Inneren einer zylindrischen Aufnahme eingesetzt ist, in eine feste Installation, um ausgehend vom Inneren des rohrförmigen Teils wenigstens zwei Ausschnitte von axialer Richtung bezüglich der zylindrischen Aufnahme und zum rohrförmigen Teil zu erzeugen, mit in an sich bekannter Weise wenigstens einer Elektrode, Zuführeinrichtungen zu dieser Elektrode von elektrischem Strom, Einrichtungen zum Inbewegungsetzen von Wasser in dem rohrförmigen Teil, einen Träger (11), der mit Befestigungseinrichtungen (23) versehen ist, auf der festen Installation, in der Nähe der zylindrischen Aufnahme und mit Führungseinrichtungen (15, 22) in eine Richtung, die der axialen Richtung der zylindrischen Aufnahme entspricht, wenn die Befestigung des Trägers erzeugt ist, **dadurch gekennzeichnet, daß** sie weiterhin aufweist :

eine Anordnung (12), die bezüglich des Trägers (11) in axiale Richtung bewegbar angebracht ist, dank der Führungseinrichtungen (15, 22), und die Antriebseinrichtungen zum Bewegen (40, 41, 43, 31) in die axiale Richtung aufweist,

einen rohrförmigen Stab (13), der auf der beweglichen Anordnung (12) angebracht ist, in der axialen Richtung, der einen Längsbereich (13b) aufweist, dessen Durchmesser geringer ist als der innere Durchmesser des rohrförmigen Teils (1, 3),

einen Elektrodenträger (14), der am freien Ende des Längsbereichs (13b) des Stabs (13) befestigt ist, gebildet in der Form eines rohrförmigen Teils, dessen einer Ausnehmungsbereich (27) von Stumpfform ist, getrennt in wenigstens zwei Segmente (80a, 80b, 80c) durch axiale Ausschnitte (79), welche jeweils eine Elektrode (78) tragen,

eine Betätigungsstange (82), die axialbeweglich in dem rohrförmigen Stab (13) angeordnet ist und mit axialen Bewegungseinrichtungen (95, 96, 97, 92, 87, 76) verbunden ist, deren Ende (86), das in die stumpfförmige Ausnehmung (77) hineinragt, einen Durchmesser hat, der größer ist als der Durchmesser der Ausnehmung (77), und die radiale Bewegung der Elektorden (78) erlaubt, und

eine Vorrichtung (16) zum In-axiale-Vibration-Versetzen, die einen Bereich (16a) aufweist, der in Axialrichtung bewegbar ist, verbunden mit dem rohrförmigen Stab (13) und einen festen Bereich aufweist, der an der bewegbaren Anordnung (12) angebracht ist.

2. Vorrichtung zum Ausschneiden nach Anspruch 1, in dem Fall, wo das rohrförmige Teil (1) gebildet wird aus einem Rohr eines Dampferzeugers, der im Inneren einer zylindrischen Aufnahme der rohrförmigen Platte (2) des Dampferzeugers eingesetzt ist, **dadurch gekennzeichnet, daß** der Träger (11) aus einer Platte gebildet wird, und daß die Befestigungseinrichtungen (23) in der Lage sind, die Befestigung dieser Platte (11) in einer Position sicherzustellen, die parallel ist zur Eintrittsseite (2a) der rohrförmigen Platte.

3. Vorrichtung zum Ausschneiden nach Anspruch 2, **dadurch gekennzeichnet, daß** die Befestigungseinrichtung (23) der Platte (11), parallel zur Seite (2a) der rohrförmigen Platte, von radial versetzbaren Ringen (28) gebildet sind, deren nominaler Außendurchmesser geringer ist als der innere Durchmesser der Rohre (1') des Dampferzeugers, und von Einrichtungen (26, 27) gebildet sind, zur Erzeugung des radialen Versetzens der Ringe (28) im Inneren eines Rohrs (1') des Dampferzeugers.

4. Vorrichtung zum Ausschneiden nach Anspruch 3, **dadurch gekennzeichnet, daß** die Einrichtungen zum radialen Versetzen der Ringe (28) gebildet werden aus einer Stange (25) und von einer Kniehebelvorrichtung (27), die erlaubt, die Stange (25) in ihrer axialen Richtung zu bewegen, wobei die Ringe (28) eingesetzt sind zwischen einer Andrückeinrichtung (29), die mit der Stange (25) verbunden ist, und einer Säule (26), in Andruck auf die Trägerplatte (11).

5. Vorrichtung zum Ausschneiden nach Anspruch 2, **dadurch gekennzeichnet,** daß die Führungseinrichtungen (50, 51) der bewegbaren Anordnung (12) bezüglich der Trägerplatte (11) gebildet werden aus Säulen, die an einem ihrer Enden auf der Trägerplatte (11) senkrecht zu dieser befestigt sind, wobei die bewegbare Anordnung (12) Kugelbüchsen (52) aufweist, die einer jeden der Säulen (50, 51) zugeordnet sind.

6. Vorrichtung zum Ausschneiden nach Anspruch 2, **dadurch gekennzeichnet,** daß die Einrichtungen zum Bewegen der bewegbaren Anordnung (12) gebildet sind aus einer Schraube (31), die mit der Trägerplatte (11) verbunden ist durch eines ihrer Enden und senkrecht zu dieser Trägerplatte (11), mittels einer Mutter (43), die an der Schraube (31) angreift und drehbar an der bewegbaren Anordnung (12) angebracht ist, und durch Drehantriebseinrichtungen der Mutter (43), gebildet von einem Motor (40) und wenigstens einem Ritzel (41, 42), das von der bewegbaren Anordnung (12) getragen wird.

7. Vorrichtung zum Ausschneiden nach Anspruch 6, **dadurch gekennzeichnet,** daß sie zwei Stecker (53, 54) aufweist, die mit der Trägerplatte (11) verbunden sind, und Anschläge (56, 57) aufweist, die mit der bewegbaren Anordnung (12) verbunden sind, um das Anhalten des Motors in eine Bewegungsrichtung und in die andere zu erzeugen, gemäß der senkrechten Richtung zur Trägerplatte (11).

8. Vorrichtung zum Ausschneiden nach Anspruch 2, **dadurch gekennzeichnet,** daß die bewegbare Anordnung (12) wenigstens zwei parallele Platten (33, 34, 35) aufweist, die untereinander durch Säulen (36, 37) senkrecht zu den Platten (33, 34, 35) zusammengefaßt sind, wobei die Führungseinrichtungen (50, 51, 52) der bewegbaren Anordnung (12) bezüglich der Trägerplatte (11) eine Bewegung der bewegbaren Anordnung (12) in die Richtung senkrecht zur Trägerplatte (11) und zu den Platten (33, 34, 35), parallel zur Trägerplatte (11) sicherstellen.

9. Vorrichtung zum Ausschneiden nach einem der Ansprüche 2 bis 8, **dadurch gekennzeichnet,** daß der Stab (13) an einem seiner Enden eine Befestigungsfläche (13a) aufweist, und daß die bewegbare Anordnung (12) eine Vorrichtung zum axialen Verriegeln und Entriegeln (60) der Befestigungsfläche (13a) in der bewegbaren Anordnung (12) aufweist.

10. Vorrichtung zum Ausschneiden nach Anspruch 9, **dadurch gekennzeichnet,** daß die Vorrichtung zum Verriegeln und Entriegeln (60) des Stabes (13) gebildet ist aus einem Stabträger (61) von rohrförmiger Gestalt, der starr verbunden ist mit dem bewegbaren Bereich (16a) des Vibrators (16), dessen Seitenwand mit Öffnungen von radialer Richtung (64) durchsetzt ist, die jeweils wenigstens eine Kugel (65) einschließen, durch einen äußeren Ring (63), der Aufnahmen (67) auf seiner inneren Oberfläche aufweist, die drehbar um den rohrförmigen Stabträger (61) angeordnet sind, und durch Betätigungseinrichtungen (70, 73, 76) gebildet wird, um den äußeren Ring (63) in die eine oder die andere Richtung um die Achse des rohrförmigen Trägers (61) zu drehen, wobei die Befestigungsfläche (13a) des Stabs (13) einen axialen Verriegelungshals aufweist, der in der Lage ist, wenn der Stab (13) in den Stabträger (61) eingreift, gegenüber den Öffnungen (64) zu kommen, die die Kugeln (65) einschließen, und die Drehung des äußeren Rings (63) Öffnungen (64) gegenüberliegend bringt, die die Kugeln (65) einschließen, entweder eine Aufnahme (67), um die Entriegelung des Stabs zu erzeugen, oder einen Mittenbereich der inneren Oberfläche des Rings (63) bildet, um die axiale Verriegelung des Stabs (13) durch Einführen von Kugeln (65) in den Hals der Befestigungsfläche (13a) zu erzeugen.

11. Vorrichtung zum Ausschneiden nach Anspruch 9, **dadurch gekennzeichnet,** daß die Befestigungsfläche (13a) des rohrförmigen Stabs (13) eine mit Innengewinde versehene Ausnehmung (87′) aufweist, und daß die Betätigungsstange (82), die axial in dieser Ausnehmung angeordnet ist, einen mit Gewinde versehenen Bereich (87) aufweist in Eingriff mit der mit Innengewinde versehenen Ausnehmung (87′), wobei die Betätigungsstange (82) mit Einrichtungen (95, 96, 97, 92) verbunden ist, für ihr in Drehung versetzen, um ihre Achse (8), und wobei der Gewindebereich (87), der koaxial zur Betätigungsstange (82) ist, durch Zusammenwirken mit der mit Innengewinde versehenen Ausnehmung (87′) die axiale Bewegung der Betätigungsstange (82) und die radiale Bewegung der Elektroden (78) sicherstellt.

12. Vorrichtung zum Ausschneiden nach Anspruch 11, **dadurch gekennzeichnet,** daß die Drehantriebseinrichtungen der Stange (82) aus einem Reduktionsgetriebe (95), wenigstens einem Ritzel (96, 97, 92), das durch das Ritzelgetriebe in Drehung versetzt wird, und zwei Führungssäulen (98), gebildet sind, die mit einem Ritzel (92) verbunden sind, das durch das Reduziergetriebe (95) angetrieben wird, und in Gleiteingriff in einem Endstück (89) sind, das mit dem Ende der Betätigungsstange (82) verbunden ist, entgegengesetzt seinem Ende (86), das in die kegelstumpfförmige Ausnehmung (77) des Elektrodenträgers (14) hineinragt.

13. Vorrichtung zum Ausschneiden nach Anspruch 12, **dadurch gekennzeichnet,** daß sie eine Einrichtung zur Wegmessung der Betätigungsstange (82) aufweist, die durch ein Potentiometer (102) gebildet wird, dessen Drehabschnitt für seinen Drehantrieb mit der Ausgangswelle des Reduziergetriebes (95) über wenigstens ein Ritzel (96, 100) verbunden ist.

14. Verwendung einer Vorrichtung nach einem der Ansprüche 2 bis 13 zum Ausschneiden von innen eines rohrförmigen Teils, gebildet aus einem Rohr eines Dampferzeugers (1) und einer Ausbesserungsmanschette (3) dieses Rohres, die im Inneren des Rohres (1) eingesetzt ist, wobei das Ausschneiden in einer Zone (A) der Manschette (3) ausgeführt wird, die im Inneren des Rohres (1) eingesetzt ist, außerhalb der rohrförmigen Platte (2).

15. Verwendung nach Anspruch 14, **dadurch gekennzeichnet,** daß der Innendurchmesser des Rohres (1) geringer ist als 20 mm.

## Claims

1. Device for cutting by spark machining the wall of a tubular piece crimped inside a cylindrical receptacle in a fixed installation, in order to make, from the inside of the tubular piece, at least two cuts in the axial direction relative to the cylindrical receptacle and to the tubular piece, comprising, in known manner, at least one electrode, means for supplying said electrode with electrical current, means for circulating water in the tubular piece, a support (11) equipped with means (23) for mounting onto the fixed installation near the cylindrical receptacle and with means (15, 22) for guidance in a direction corresponding to the axial direction of the cylindrical receptacle, when the mounting of the support is carried out, characterized in that it also comprises :

— an assembly (12) movably mounted relative to the support (11) in the axial direction as a result of the guide means (15, 22) and comprising drive means (40, 41, 43, 31) for displacement in the axial direction,

— a tubular pole (13) mounted onto the assembly (12) movable in the axial direction, having a longitudinal part (13b), the diameter of which is less than the inside diameter of the tubular piece (1, 3),

— an electrode-holder (14) mounted onto the free end of the longitudinal part (13b) of the pole (13) which has the form of a tubular piece, of which a part (77) of the bore is of frustoconical shape, separated, by means of axial cuts (79), into at least two segments (80a, 80b, 80c), each carrying an electrode (78),

— an actuating rod (82) mounted so as to be axially movable in the tubular pole (13) and associated with means (95, 96, 97, 92, 87, 76) for axial displacement and of which the end (86) penetrating into the frustoconical bore (77) has a diameter greater than the diameter of the bore (77) and allows the radial displacement of the electrodes (78),

— and a device (16) for axial vibration, having a part (16a) movable in the axial direction and fixedly secured with the tubular pole (13) and a fixed part mounted onto the movable assembly (12).

2. Cutting device according to claim 1, in the case where the tubular piece (1) comprises a steam-generator tube crimped inside a cylindrical receptacle of the tube plate (2) of the steam generator, characterized in that the support (11) comprises a plate, and in that the means (23) for mounting are capable of ensuring that this plate (11) is mounted in a position parallel to the inlet face (2a) of the tube plate.

3. Cutting device according to claim 2, characterised in that the means (23) for mounting the plate (11) parallel to the face (2a) of the tube plate comprise radially expandable rings (28), the nominal outside diameter of which is less than the inside diameter of the tubes (1') of the steam generator, and means (26, 27) for ensuring the radial expansion of the rings (28) inside a tube (1') of the steam generator.

4. Cutting device according to claim 3, characterised in that the means for the radial expansion of the rings (28) comprise a rod (25) and a toggle-type device (27) making it possible to move the rod (25) in its axial direction, the rings (28) being inserted between a bearing means (29) fixedly secured to the rod (25) and a column (26) bearing on the support plate (11).

5. Cutting device according to claim 2, characterised in that the means (50, 51) for guiding the movable assembly (12) relative to the support plate (11) comprise columns mounted, at one of their ends, onto the support plate (11) perpendicular to said support plate, the movable assembly (12) having ball bushes (52) associated with each of the columns (50, 51).

6. Cutting device according to claim 2, characterised in that the means for the displacement of the movable assembly (12) comprises a screw (31) fixedly connected with the support plate (11) by means of one of its ends and perpendicular to said support plate (11), a nut (43) engaged on the screw (31) and rotatably mounted on the movable assembly (12) and means for driving the nut (43) in rotation, comprising of a motor (40) and at least one pinion (41, 42), carried by the movable assembly (12).

7. Cutting device according to claim 6, characterised in that it comprises two contactors (53, 54) fixedly secured to the support plate (11) and stops (56, 57) fixedly secured to the movable assembly (12), in order to stop the motor in either direction of displacement in the direction perpendicular to the support plate (11).

8. Cutting device according to claim 2, characterised in that the movable assembly (12) comprises at least two parallel plates (33, 34, 35) joined to one another by means of columns (36, 37) perpendicular to the plates (33, 34, 35), the means (50, 51, 52) for guiding the movable assembly (12) relative to the support plate (11) ensuring a displacement of the movable assembly (12) in the direction perpendicular to the support plate (11) and to the plates (33, 34, 35) parallel to the support plate (11).

9. Cutting device according to any one of claims 2 to 8, characterised in that the pole (13) has a base (13a) at one of its ends, and in that the movable assembly (12) comprises a device (60) for the axial locking and unlocking of the base (13a) in the movable assembly (12).

10. Cutting device according to claim 9, characterised in that the device (60) for locking and unlocking of the pole (13) comprises a tubular pole support (61) which is rigidly connected to the movable part (16a) of the vibrator (16), the wall of which has radially directed orifices (64) each containing at least one ball (65), outer ring (63) having receptacles (67) on its inner surface and rotatably mounted about the tubular pole support (61), and actuation means (70, 73, 76) for rotating the outer ring (63) in either direction about the axis of the tubular support (61), the base (13a) of the pole (13) having an axial locking groove which, when the pole (13) is engaged in the pole support (61), is capable of moving opposite the orifices (64) containing the balls (65), and the rotation of the outer ring (63) placing opposite the orifices (64) containing the balls (65) either a receptacle (67) to ensure the unlocking of the pole or an intermediate part of the inner surface of the ring (63) to ensure the axial locking of the pole (13) as a result of the balls (65) entering the groove of the base (13a).

11. Cutting device according to claim 9, characterised in that the base (13a) of the tubular pole (13) has an internally threaded bore (87'), and in that the actuating rod (82) arranged axially in said bore has a threaded part (87) engaged with the internally threaded bore (87'), the actuating rod (82) being associated with means (95, 96, 97, 92) for rotating it about its axis (8), and the threaded part (87) coaxial relative to the actuating rod (82) ensuring the axial displacement of the actuating rod (82) and the radial movement of the electrodes (78) as a result of interaction with the internally threaded bore (87').

12. Cutting device according to claim 11, characterised in that the means for driving the rod (82) in rotation comprise a geared motor (95), at least one pinion (96, 97, 92) driven in rotation by the geared motor, and two guide columns (98) which are fixedly secured to a pinion (92) driven by the geared motor (95) and which are slidably engaged in an endpiece (89) fixedly secured to the end of the actuating rod (82) opposite its end (86) penetrating the frustoconical bore (77) of the electrode-holder (14).

13. Cutting device according to claim 12, characterised in that it comprises means for measuring the displacement of the actuating rod (82), comprising a potentiometer (102), the rotary part of which is connected, for driving it in rotation, to the output shaft of the geared motor (95) by means of at least one pinion (96, 100).

14. Use of a device according to any one of claims 2 to 13 for cutting from the inside a tubular piece comprising a steam-generator tube (1) and a repair liner (3) for this tube crimped inside the tube (1), the cutting being carried out in a zone (A) of the liner (3) crimped inside the tube (1) on the outside of the tube plate (2).

15. Use according to claim 14, characterised in that the inside diameter of the tube (1) is less than 20 mm.

FIG_1A

FIG_1B

FIG_1

**FIG. 2**

FIG.3A

FIG. 3B

FIG_4

FIG_5

FIG.6

FIG.7

FIG.9

FIG.8

22